# EUROPEAN PATENT APPLICATION

(11) **EP 3 056 338 A1**
(43) Date of publication of application: **17.08.2016**
(21) Application number: 16154707.0
(22) Date of filing: 08.02.2016
(51) Int. Cl.: B32B 5/02, B32B 27/12, B32B 27/34

(54) **FIBER REINFORCED THERMOPLASTIC RESIN MEMBER**

(30) Priority: 12.02.2015 JP 2015025415
(71) Applicant: JTEKT Corporation, Chuo-ku, Osaka-shi Osaka 542-8502 (JP)
(72) Inventor: BABA, Toshiyuki, Osaka-shi, Osaka, 542-8502 (JP)
(74) Representative: Winter, Brandl, Fürniss, Hübner, Röss, Kaiser, Polte - Partnerschaft mbB

(57) **Abstract**

A fiber reinforced thermoplastic resin member 1 is formed by impregnating continuous fibers 2 with a thermoplastic resin 3. As surfaces of the fiber reinforced thermoplastic resin member 1, surface layers 5 are provided which are formed of a thermoplastic resin 4 having a higher molecular weight than the thermoplastic resin 3.

## Description

### BACKGROUND OF THE INVENTION

### 1. Field of the Invention

The invention relates to a fiber reinforced thermoplastic resin member.

### 2. Description of Related Art

In recent years, application of members formed of fiber reinforced thermoplastic resins such as carbon fiber reinforced thermoplastic resin (CFRTP) to automotive components and the like has been studied; CFRTP is a thermoplastic resin reinforced with carbon fibers to have an increased toughness.

The fiber reinforced thermoplastic resin member is typically manufactured by, for example, laminating a needed number of sheets of continuous fibers formed of carbon fibers or the like and a needed number of sheets of a thermoplastic resin such as polyamide (PA), and performing warm press forming, warm roll forming, or the like on the resultant laminate at the melting temperature of the thermoplastic resin or higher to melt the thermoplastic resin so that the continuous fibers are impregnated with the thermoplastic resin and the continuous fibers and the thermoplastic resin are entirely integrated with each other.

However, the thermoplastic resin is more viscous than liquid thermosetting resins even when melted, and thus, impregnating the continuous fibers with the thermoplastic resin is difficult. This is likely to lead to defects (voids) and the like that may reduce the strength of the laminate.

Thus, at present, the continuous fibers are commonly impregnated with a thermoplastic resin having as low a molecular weight as possible and having a high fluidity. This allows reducing defects and the like and increasing the strength of the fiber reinforced thermoplastic resin member, but on the other hand, sacrifices the toughness of the fiber reinforced thermoplastic resin member, which is otherwise an advantage of the fiber reinforced thermoplastic resin member. In particular, the wear resistance of surfaces of the fiber reinforced thermoplastic resin member, which contributes to sliding characteristics and the like, may become insufficient.

Japanese Patent Application Publication No. H8-20021 (JP H8-20021 A) discloses that a fiber reinforced thermoplastic resin member is manufactured by mixing, in an air current, powder of a thermoplastic resin and discontinuous fibers coated with a similar thermoplastic resin, and then performing warm press forming on the resultant mixture to melt the thermoplastic resin and integrate the thermoplastic resin with the discontinuous fibers.

Japanese Patent Application Publication No. 2001-201966 (JP 2001-201966 A) discloses that a fiber reinforced thermoplastic resin member is manufactured by blowing a surfactant and then a diluted solution of elastomer against discontinuous fibers dispersed in an air current to mix the surfactant, the diluted solution of elastomer, and the discontinuous fibers together, drying the resultant mixture, melting and kneading the mixture along with a thermoplastic resin, and performing injection molding or the like on the mixture.

All of the above-described manufacturing methods allow manufacture of a fiber reinforced thermoplastic resin member that has reduced defects and the like and that is uniformly filled with a thermoplastic resin.
However, all of the above-described manufacturing methods need a process of dispersing the discontinuous fibers in the air current to mix the discontinuous fibers with the thermoplastic resin or the like. This leads to an increased number of manufacturing processes and reduces the productivity of the fiber reinforced thermoplastic resin member. Furthermore, the fibers used are limited to short discontinuous fibers that can be dispersed in the air current. Thus, the fiber reinforced thermoplastic resin member may be insufficiently reinforced.

Japanese Patent Application Publication No. 2003-82117 (JP 2003-82117 A) discloses that a fiber reinforced thermoplastic resin member is manufactured by discontinuously attaching a first resin to sheets of continuous fibers or discontinuously attaching a second resin that is not melted at the melting temperature of the first resin to the sheets of the continuous fibers via the first resin to form substrates, bonding the substrates together with the first or second resin to produce a preform, and further impregnating the preform with a third resin. However, in the technique disclosed in JP 2003-82117 A, the third resin is limited to a liquid thermosetting resin.

When an attempt is made to adopt a thermoplastic resin instead of the thermosetting resin, a thermoplastic resin having a high fluidity and a low molecular weight still needs to be selected. Thus, insufficient toughness and wear resistance still remain a problem.

### SUMMARY OF THE INVENTION

It is an object of the invention is to provide a fiber reinforced thermoplastic resin member that can be manufactured at a high productivity by normal warm press forming or the like and that has reduced defects and high strength due to continuous fibers finely impregnated with a thermoplastic resin, and that also has a higher toughness, particularly a higher surface wear resistance, which contributes to sliding characteristics, than fiber reinforced thermoplastic resin members according to the related art.

According to an aspect of the invention, a fiber reinforced thermoplastic resin member formed by impregnating continuous fibers with a thermoplastic resin includes, as a surface of the fiber reinforced thermoplastic resin member, a surface layer formed of a thermoplastic resin having a higher molecular weight than an interior thermoplastic resin.

According to the aspect, the fiber reinforced thermoplastic resin member can be manufactured at a high productivity by impregnating the continuous fibers with the thermoplastic resin by normal warm press forming or the like.

As the thermoplastic resin impregnated into the continuous fibers to form the interior of the fiber reinforced thermoplastic resin member, a thermoplastic resin that has a high fluidity and a low molecular weight and that is thus easily impregnated into the continuous fibers is selectively used. Thus, it is possible to suppress defects and the like in the interior.

This, in combination with the use of the continuous fibers as reinforced fibers, makes it possible to enhance the strength of the fiber reinforced thermoplastic resin member.
Moreover, the surface layer of the fiber reinforced thermoplastic resin member is formed of the thermoplastic resin having a higher molecular weight than the interior thermoplastic resin. Thus, it is possible to increase toughness of the fiber reinforced thermoplastic resin member, particularly the surface wear resistance thereof, which contributes to sliding characteristics and the like, as compared to the related art.

The surface layer is a portion in which tension or compression stress is applied most strongly when bonding stress is applied to the fiber reinforced thermoplastic resin member. Therefore, forming the surface layer from the thermoplastic resin having a high toughness and a high molecular weight also allows improving the resistance of the fiber reinforced thermoplastic resin member to the bending stress, that is, the flexural property of the fiber reinforced thermoplastic resin member.

In the fiber reinforced thermoplastic resin member according to the aspect, the interior thermoplastic resin may have a number average molecular weight Mn of 50,000 or less.

In the fiber reinforced thermoplastic resin member according to the aspect, as the interior thermoplastic resin, a thermoplastic resin having a high fluidity, a low molecular weight, and a number average molecular weight Mn of 50,000 or less is selectively used. Thus, it is possible to more finely suppress defects and the like in the interior as described above.

In the fiber reinforced thermoplastic resin member according to the aspect, the surface layer may have a thickness of 100 µm or less.

In the fiber reinforced thermoplastic resin member according to the aspect, the surface layer has a thickness of 100 µm or less. This minimizes an impregnation distance of the thermoplastic resin, which forms the surface layer, has a high molecular weight, and thus has a low fluidity and is difficult to be impregnated into the continuous fibers, and finely suppresses defects and the like from occurring, particularly near the surface layer..

In the fiber reinforced thermoplastic resin member according to the aspect, the surface layer may be formed of a thermoplastic resin that is similar to the interior thermoplastic resin and that has a higher molecular weight than the interior thermoplastic resin.

In the fiber reinforced thermoplastic resin member according to the aspect, as the thermoplastic resin forming the surface layer, a thermoplastic resin that is similar to the interior thermoplastic resin and that has a higher molecular weight than the interior thermoplastic resin is selectively used. Consequently, the adhesion and the integrity of the surface layer to and with the interior of the fiber reinforced thermoplastic resin member are enhanced, which more finely suppresses separation of the surface layer.

The number average molecular weight of the thermoplastic resin is represented as a measured value, in terms of polystyrene, obtained by a GPC method using, as a column, TSK gel (registered trade mark) Super HM-M manufactured by TOSOH CORPORATION.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a sectional view of an interior of an example of an embodiment of a fiber reinforced thermoplastic resin member in the present invention;
FIG. 2 is a perspective view illustrating an example of a process of manufacturing the fiber reinforced thermoplastic resin member in the example in FIG. 1;
FIG. 3 is a stereomicroscopic photograph depicting a section of sheets of continuous fibers formed of carbon fibers that are impregnated with PA66 having a number average molecular weight Mn of approximately 20,000 by warm press forming;
FIG. 4 is a stereomicroscopic photograph depicting a section of sheets of continuous fibers formed of carbon fibers that are impregnated with PA66 having a number average molecular weight Mn of approximately 40,000 by warm press forming;
FIG. 5 is a stereomicroscopic photograph depicting a section of sheets of continuous fibers formed of carbon fibers that are impregnated with PA66 having a number average molecular weight Mn of approximately 60,000 by warm press forming; and
FIG. 6 is a graph illustrating a relation between the number average molecular weight Mn of the PA66 as a thermoplastic resin and wear resistance.

### DETAILED DESCRIPTION OF EMBODIMENTS

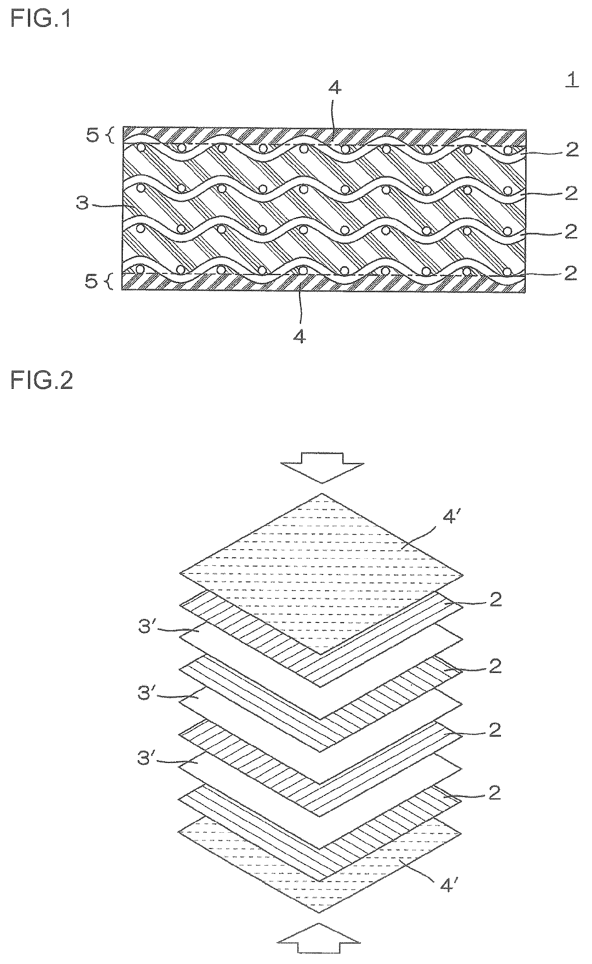

FIG. 1 is an enlarged sectional view of an interior of an example of an embodiment of a fiber reinforced thermoplastic resin member in the present invention. FIG. 2 is a perspective view illustrating an example of a process of manufacturing the fiber reinforced thermoplastic resin member in the example in FIG. 1.
As seen in FIG. 1, a fiber reinforced thermoplastic resin member 1 in this example is formed by integrating a plurality of (in the figures, four) layered sheets of continuous fibers 2 together using a thermoplastic resin 3 with which the continuous fibers 2 are impregnated, and includes, on both surfaces of the fiber reinforced thermoplastic resin member 1, surface layers 5 formed of a thermoplastic resin 4 having a higher molecular weight than the interior thermoplastic resin 3.

In the fiber reinforced thermoplastic resin member 1 of the example, as the thermoplastic resin 3 impregnated into the continuous fibers 2 to form the interior of the fiber reinforced thermoplastic resin member 1, a thermoplastic resin that has a high fluidity and a low molecular weight and that is thus easily impregnated into the continuous fibers 2 is selectively used. Thus, it is possible to suppress defects and the like in the interior.
This, in combination with the use of the continuous fibers 2 as reinforced fibers, makes it possible to enhance the strength of the fiber reinforced thermoplastic resin member 1.

The surface layers 5 of the fiber reinforced thermoplastic resin member 1 are formed of the thermoplastic resin 4 having a higher molecular weight than the interior thermoplastic resin 3. Thus, it is possible to increase the toughness of the fiber reinforced thermoplastic resin member 1, particularly the surface wear resistance thereof, which contributes to sliding characteristics and the like, as compared to the related art.
The surface layers 5 are portions in which tension or compression stress is applied most strongly when bending stress is applied to the fiber reinforced thermoplastic resin member 1. Therefore, forming the surface layers 5 from the thermoplastic resin 4 having a high toughness and a high molecular weight also allows improving the flexural property of the fiber reinforced thermoplastic resin member 1.

As seen in FIG. 2, the fiber reinforced thermoplastic resin member 1 in this example can be manufactured at a high productivity by impregnating the continuous fibers with the thermoplastic resin by normal warm press forming or the like.
That is, the layered sheets of the continuous fibers 2 and sheets 3' of thermoplastic resin that are a source of the thermoplastic resin 3 with which the continuous fibers 2 are impregnated are alternately laminated together. Sheets 4' of the thermoplastic resin 4 that are sources of the surface layers 5 are laid on the laminate as an uppermost layer and a lowermost layer.

Next, while the laminate as a whole is heated at a temperature higher than the melting points of the thermoplastic resins 3 and 4, the laminate is subjected to warm press forming, warm roll forming, or the like in which the laminate is pressed in a laminating direction depicted by blank arrows in FIG. 2. The thermoplastic resins 3 and 4 are melted and impregnated into the continuous fibers 2, so that the continuous fibers 2 and the thermoplastic resins 3 and 4 are entirely integrated with each other. Thus, the fiber reinforced thermoplastic resin member 1 in the example in FIG. 1 is manufactured.
As the thermoplastic resins 3 and 4, one or more of the following thermoplastic resins can be used: polyamides such as PA6, PA11, PA12, PA46, PA66, PA612, PA610, PA6T, PA9T, PA61, and PAMXD6, polyphenylene sulfide, thermoplastic polyurethane, thermoplastic polyimide, and polyether ether ketone.

In particular, polyamide is preferable in view of the trade-off between the strength and the versatility of the fiber reinforced thermoplastic resin member 1.
As the thermoplastic resins 3 and 4, thermoplastic resins that are similar but having different molecular weights are preferably used in combination. For example, when a polyamide is used as the thermoplastic resin 3, a polyamide having a higher molecular weight than the thermoplastic resin 3 may be used as the thermoplastic resin 4 in combination with the thermoplastic resin 3.

Consequently, the thermoplastic resins 3 and 4 can be appropriately melted and integrated together at an interface between the thermoplastic resins 3 and 4 by the above-described warm press forming or the like. The adhesion and the integrity of the surface layers 5 to and with the interior of the fiber reinforced thermoplastic resin member 1 are enhanced, which more finely suppresses separation of the surface layers 5 when stress is applied to the surface layers 5.
Thus, the wear resistance of the surfaces of the fiber reinforced thermoplastic resin member 1 can further be enhanced. Since separation is inhibited when bending stress is applied to the fiber reinforced thermoplastic resin member 1, the flexural property of the fiber reinforced thermoplastic resin member 1 can be further improved.

The thermoplastic resin 3 forming the interior of the fiber reinforced thermoplastic resin member 1 preferably has a number average molecular weight Mn of 50,000 or less in order to exhibit as low a viscosity as possible when melted by warm press forming or the like so that the continuous fibers 2 are smoothly and uniformly impregnated with the thermoplastic resin 3 without defects or the like.
For example, it is obvious from test results described below that the number average molecular weight Mn of the thermoplastic resin 3 is preferably within the above-described range.

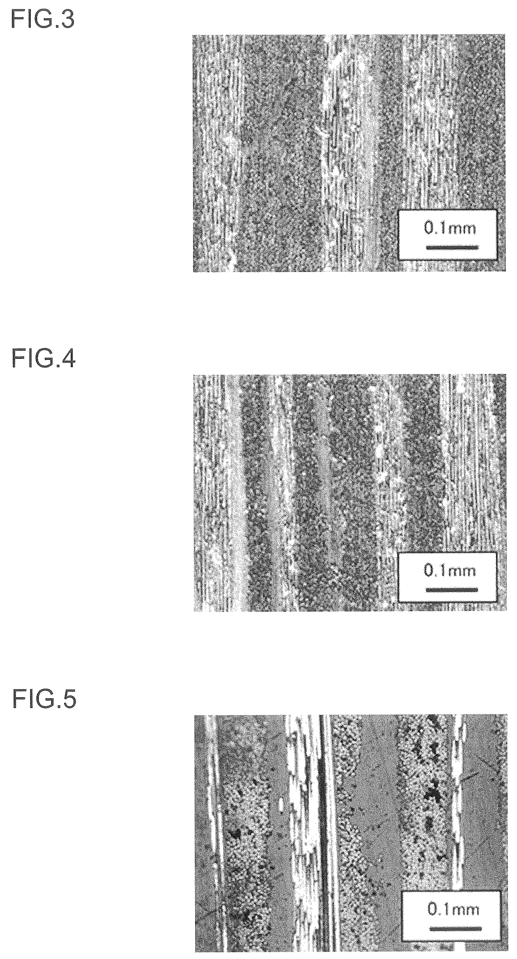

That is, FIGS. 3 to 5 are stereomicroscopic photographs depicting sections of sheets of continuous fibers formed of carbon fibers that are impregnated with PA66 having number average molecular weights Mn of approximately 20,000 (FIG. 3), approximately 40,000 (FIG. 4), and approximately 60,000 (FIG. 5) under the same conditions by warm press forming.
Specifically, sheets of continuous fibers [UD (Uni Direction) material] and sheets of PA66 having one of the above number average molecular weights Mn are alternately laminated so that each sheet of PA66 is sandwiched between the sheets of continuous fibers. Each of the sheets of continuous fibers is formed of fiber bundles in which a large number of carbon fibers are aligned in one direction. The sheets of continuous fibers are laminated such that the alignment direction of the carbon fibers in each sheet of continuous fibers is perpendicular to the alignment direction of the carbon fibers in another sheet of continuous fibers that is adjacent to that sheet. All the sheets are integrated together by warm press forming, and are then sliced in a thickness direction. The section is imaged using a stereomicroscope.

In FIGS. 3 to 5, a set of vertical white lines represents a bundle of carbon fibers aligned in the same direction. A set of small blank circles between sets of the vertical white lines represents a section of the bundle of the carbon fibers aligned in a direction perpendicular to the above direction. Gray portions represent PA66. Black portions represent defects.
A comparison of FIGS. 3 to 5 indicates as follows. In FIG. 5, a large number of large defects are observed, and PA66 fails to be impregnated into the interior of the bundle of the carbon fibers but forms thick independent layers. On the other hand, in FIG. 3 and FIG. 4, few defects and few independent layers of PA66 are observed, indicating that the carbon fibers were impregnated with PA66 without any gap.

This indicates that, to minimize the viscosity of the thermoplastic resin when the thermoplastic resin is melted and to allow the continuous fibers to be smoothly and uniformly impregnated with the thermoplastic resin without defects or the like, the thermoplastic resin such as PA66 preferably has a number average molecular weight Mn of 50,000 or less.
In view of producing a further improved effect, the number average molecular weight Mn of the thermoplastic resin 3 in the above range is preferably 30,000 or less, and particularly preferably 10,000 or less.

In view of providing the fiber reinforced thermoplastic resin member 1 with an appropriate strength, the number average molecular weight Mn of the thermoplastic resin 3 in the above range is preferably 2,000 or more and particularly preferably 5,000 or more.
The molecular weight of the thermoplastic resin 3 need not be constant, but the distribution of the molecular weight may be varied such that the molecular weight increases toward the surface layers 5. This allows the toughness to increase toward the surface layers 5, and thus the flexural property of the fiber reinforced thermoplastic resin member 1 can be further enhanced. However, the thermoplastic resin 3 tends to be more difficult to be impregnated into the continuous fibers toward the interior of the fiber reinforced thermoplastic resin member 1. Therefore, this is preferably taken into account when the variation of the molecular-weight distribution is determined.

To vary the molecular-weight distribution, for example, in the case of a manufacturing method in FIG. 2, the sheets 3' may be configured as follows. A sheet having a smallest molecular weight may be used in a middle portion of the layers in the thickness direction and sheets having a larger molecular weight than the sheet in the middle portion may be used in portions close to the surface layers 5.
The thermoplastic resin 4 forming the surface layers 5 needs to have a higher molecular weight than the thermoplastic resin 3 in order to enhance the wear resistance of the surfaces of the fiber reinforced thermoplastic resin member 1 as described above.

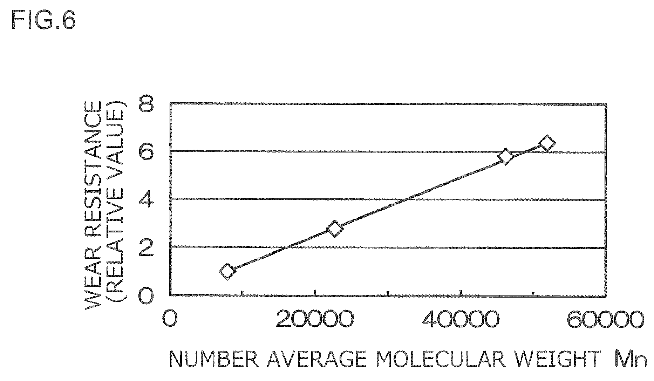

A relation between the molecular weight of the thermoplastic resin and the wear resistance is clearly shown by the results in FIG. 6, for example. FIG. 6 is a graph illustrating the relation between the number average molecular weight Mn of PA66 as a thermoplastic resin and the wear resistance.
The wear resistance was evaluated in the Suzuki type frictional wear test, and specimens for this test were used which were produced from different types of PA66 having different number average molecular weights Mn. In FIG. 6, the wear resistance determined based on the result of the frictional wear test conducted under given conditions by use of each of the specimens was represented as a value relative to the wear resistance of PA66 having a number average molecular weight Mn of 8,000, which was 1.

FIG. 6 indicates that the wear resistance can be enhanced by increasing the number average molecular weight Mn of PA66 as a thermoplastic resin.
When the thermoplastic resin 3 having a number average molecular weight in the above range of the molecular weight is used in combination with the thermoplastic resin 4, in order that the wear resistance of the fiber reinforced thermoplastic resin member 1 is enhanced as much as possible, the number average molecular weight Mn of the thermoplastic resin 4 is preferably 10,000 or more and particularly preferably 15,000 or more, and the range of the number average molecular weight Mn of the thermoplastic resin 4 preferably covers a range wider than the range of the number average molecular weight Mn of the thermoplastic resin 3.

The thermoplastic resin 4 preferably has a number average molecular weight Mn of 55,000 or less and particularly preferably 50,000 or less in order to exhibit as low a viscosity as possible when melted by warm press forming or the like such that the continuous fibers 2 are smoothly and uniformly impregnated with the thermoplastic resin 4 without defects or the like and to be appropriately melted and integrated with the interior thermoplastic resin 3.
The surface layers 5 formed of the thermoplastic resin 4 preferably have a thickness of 100 µm or less.

The thermoplastic resin 4 needs to be impregnated deep into the interior of the continuous fibers 2 when the surface layers 5 having a thickness exceeding the above range are formed. Since the thermoplastic resin 4 has a lower fluidity than the interior thermoplastic resin 3 and is difficult to be impregnated into the continuous fibers 2, it is likely that defects and the like increase as an impregnation distance increases.
In contrast, when the surface layers 5 are 100 µm or less in thickness, the impregnation distance that the thermoplastic resin 4 permeates through the continuous fibers 2 can be minimized to finely suppress defects and the like from occurring, particularly near the surface layers 5.

The lower limit of the thickness of the surface layers 5 can be set to any value. That is, any thickness can be set according to the molecular weight of the thermoplastic resin 4 forming the surface layers 5 and the wear resistance based on the molecular weight, and the wear resistance desired for the fiber reinforced thermoplastic resin member 1, that is, the acceptable amount of wear or the like.
To adjust the thickness of each of the surface layers 5, the thickness of each of the sheet 4' of the thermoplastic resin 4, which is a source for the surface layers 5, may be changed. Thus, within the above range of the thickness of each of the surface layers 5, the thickness is preferably 20 µm or more and particularly preferably 40 µm in view of enhancement of handleability of the sheets 4' and the workability and productivity required when the fiber reinforced thermoplastic resin member 1 is manufactured by the method in FIG. 2.

Examples of the sheets of the continuous fibers include sheets of carbon fibers, glass fibers, and aramid fibers.
The continuous fibers may be in the form of a UD material in which the continuous fibers are aligned in one direction or a cross material in which the continuous fibers are woven. The cloth material may be woven by commonly known methods such as plain weave, twill, sateen weave, leno weave, mock leno weave, and twill weave. However, the invention is not limited to these methods as long as the cloth material can be impregnated with a resin.

A UD material of carbon fibers is particularly preferable. Two or more UD materials may be laminated together such that the alignment direction of the continuous fibers in each UD material is perpendicular to the alignment direction of the continuous fibers in another UD material that is adjacent to that UD material as described above or such that all the UD materials are randomly aligned so that the alignment directions of the continuous fibers in the UD materials do not overlap.
The invention is not limited to the above-described embodiments.
For example, the fiber reinforced thermoplastic resin member is not limited to a flat plate shape. The fiber reinforced thermoplastic resin member 1 may be formed into any three-dimensional shape such as a semicylinder by warm press forming or the like using a mold with a predetermined three-dimensional shape.

The surface layer may be formed only on one surface of the fiber reinforced thermoplastic resin member that is required to have wear resistance or the like instead of the both surfaces of the fiber reinforced thermoplastic resin member.
The fiber reinforced thermoplastic resin member in the invention not only has a high strength but is also excellent in surface wear resistance and flexural property as described above. Thus, the fiber reinforced thermoplastic resin member in the invention may be used for various mechanical components such as automotive components that are conventionally formed of metal, for example, a rack housing, so that a reduction in the weights of such components, a further increase in the rigidity thereof, enhancement of the functions thereof, and the like may be achieved.

The configuration of the invention is applicable to, besides the automotive components, components used in various fields, for example, components of railway vehicles, ships, airplanes, and machine tools.

## Claims

1. A fiber reinforced thermoplastic resin member formed by impregnating continuous fibers with a thermoplastic resin and comprising, as a surface of the fiber reinforced thermoplastic resin member, a surface layer formed of a thermoplastic resin having a higher molecular weight than an interior thermoplastic resin.

2. The fiber reinforced thermoplastic resin member according to claim 1, wherein
the interior thermoplastic resin has a number average molecular weight Mn of 50,000 or less.

3. The fiber reinforced thermoplastic resin member according to claim 1, wherein
the surface layer has a thickness of 100 µm or less.

4. The fiber reinforced thermoplastic resin member according to claim 2, wherein
the surface layer has a thickness of 100 µm or less.

5. The fiber reinforced thermoplastic resin member according to any one of claims 1 to 4, wherein
the surface layer is formed of a thermoplastic resin that is similar to the interior thermoplastic resin and that has a higher molecular weight than the interior thermoplastic resin.
